Europäisches Patentamt

European Patent Office

Office européen des brevets

(11) Publication number: **0 342 166**
**A2**

(12) **EUROPEAN PATENT APPLICATION**

(21) Application number: **89830201.3**

(22) Date of filing: **10.05.89**

(51) Int. Cl.⁴: **F 24 F 5/00**
**B 60 H 1/32**

(30) Priority: **13.05.88 IT 4796188**

(43) Date of publication of application:
**15.11.89 Bulletin 89/46**

(84) Designated Contracting States:
**CH DE ES FR GB LI NL SE**

(71) Applicant: **Barbabella, Urbano**
**5 Via Carlo Tivaroni**
**I-00143 Roma RM (IT)**

**Polchi, Franco**
**2 Via Alessandro Poerio**
**I-00152 Roma RM (IT)**

(72) Inventor: **Barbabella, Urbano**
**5 Via Carlo Tivaroni**
**I-00143 Roma RM (IT)**

**Polchi, Franco**
**2 Via Alessandro Poerio**
**I-00152 Roma RM (IT)**

(74) Representative: **Di Cerbo, Mario et al**
**Società Italiana Brevetti Piazza Poli, 42**
**I-00187 Roma RM (IT)**

(54) **Thermal conditioning device having at least one thermoelectric module with reverse thermoelectric effect.**

(57) The invention refers to a device consisting essentially of one or more thermoelectric modules with reverse thermoelectric effect, thermically coupled to two dissipator elements, thermally insulated from each other and incorporated in a device providing forced air circulation. The device is powered directly by a battery and heats or cools the air delivered to the inside of a passenger compartment, according to the direction of the low-voltage direct electric current. The device also allows temperature control of particularly delicate environments such as the control rooms of naval vessels, and the cooling of computers and other electronic equipment.

FIG.1

Bundesdruckerei Berlin

**Description**

**"THERMAL CONDITIONING DEVICE HAVING AT LEAST ONE THERMOELECTRIC MODULE WITH REVERSE THERMOELECTRIC EFFECT"**

The present invention refers to a device incorporating at least one thermoelectric module having a reverse thermoelectric effect (also known as the Peltier effect, from the name of its discoverer). Directly powered by a battery, the device solves the problem of winter heating and summer cooling inside the passenger compartments of land vehicles, water craft and aircraft.

As is known, most air conditioners currently in use, for example those designed for automobiles and water craft, provide only for summer air conditioning (winter heating is provided by conveying engine-heated air inside the compartment). Summer air conditioning is obtained by means of a compressor (cooling cycle) driven by a transmission system linked to the engine which drives the vehicle or water craft. This type of system absorbs some of the power generated by the internal-combustion or diesel engine, and consequently increases fuel consumption.

Alternatively, a battery-powered electric motor can be used to drive the compressor. This solution is hindered, however, by the difficulty encountered, particularly in the case of motor vehicles, in installing an electric motor sufficiently powerful but also sufficiently compact and requiring a sufficiently small battery current. In fact, most of the alternators installed on automobiles cannot adequately recharge the battery if it is required to supply current to other accessories as well as to the aforesaid electric motor and the car engine itself.

The device according to the present invention overcomes all the foregoing drawbacks in that it does not require a compressor, and hence requires neither an electric motor nor connection to the engine, for instance, of the automobile or water craft. The device additionally offers several other advantages, to be illustrated below.

The thermal conditioning device according to the present invention consists essentially of at least one thermoelectric module having reverse thermoelectric effect, thermically coupled to two dissipator elements which are thermically insulated from each other and incorporated in a device providing forced air circulation.

The thermoelectric module is powered by low-voltage (4 to 10 V) direct electric current whose direction can be reversed so that the device can be used to deliver warmed air into the passenger compartment (for example, that of an automobile) during the winter, and delivering cooled air into the compartment during the summer.

Since the module is capable of converting electric current into calories or refrigeration units at an extremely rapid rate, it lends itself particularly well to being controlled, in a suitable electronic circuit, by the signal transmitted by a detector which measures the temperature inside the passenger compartment. The temperature-sensor allows the user to program the internal compartment temperature by selecting the exact degree of comfort desired, and maintains that temperature unvaried over time.

The device can consist of one or more standard modules which absorb only a fraction of the power normally needed for such applications. The above modules, considered as a whole, when controlled by a small electronic unit make it possible to solve the problem of conditioning the air in a passenger compartment in both summertime and wintertime, with 35 external air temperatures ranging from -30. to +45. C.

Unlike the conventional devices currently available on the market, the air heating and cooling device according to the present invention is powered directly by the battery, and draws all the electric current it needs to function from this source.

This working principle evidences the first great advantage of the device: the power generated by the engine of the vehicle or water craft is not affected by the conditioning system, and remains available in its entirety to propel the vehicle or craft.

A second advantage offered by the device is that the calories or refrigeration units are generated locally, so that the temperature inside the climatized comparment is more uniformly distributed.

A third advantage is the possibility, as already stated hereinbefore, of maintaining the desired temperature inside the climatized compartment constant over time by subordinating the generator of calories and refrigeration units (reverse thermoelectric-effect module) to a temperature sensor.

A fourth advantage is offered by the simplicity of design and compact dimensions of the device, which make it possible to reduce its weight and cost drastically.

A fifth advantage lies in the energy savings the device makes possible.

Lastly, the device operates noiselessly in both cooling and heating phases.

The foregoing description of the invention refers to its use in summer and winter climate control of the passenger compartments of motor vehicles, water craft and aircraft. However, the device of the invention can also be used to climatize the control rooms of air and sea craft and to control the operating temperature of computers and other electronic equipment.

The invention has been described herebefore in general terms. To better illustrate its purposes, characteristics, operation and advantages some of its embodiments will now be described in greater detail, with reference to the figures attached hereto, in which:

figure 1 shows the longitudinal cross-section view of the device in the simplified form of a "basic module" limited to the generation of calories and refrigeration units; and

figure 2 shows schematically how the device according to the invention, here comprising three thermoelectric modules with reverse thermoelectric effect, can be used to control the inside temperature of the passenger compartment of an automobile.

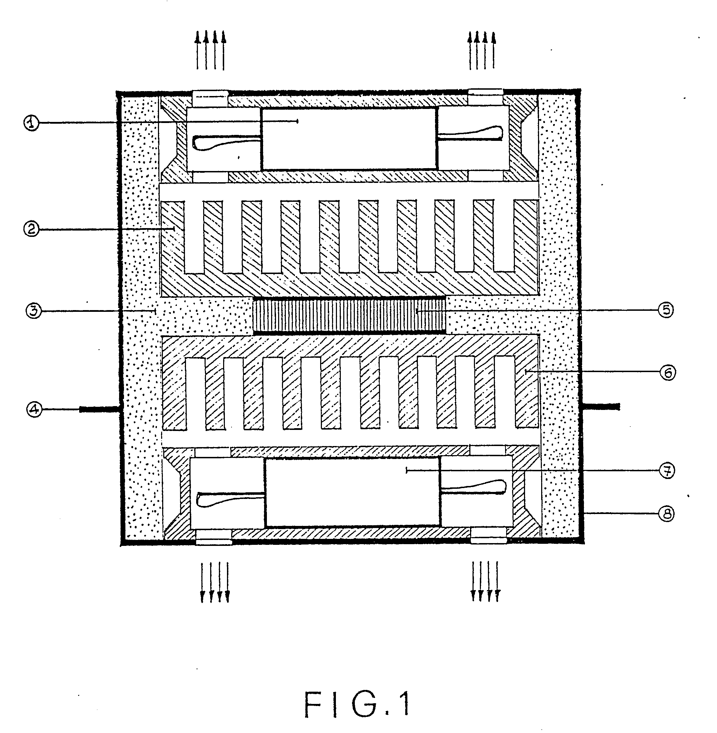

The device shown in figure 1 consists of a cube-shaped container 8 at the center of which is installed the generator element 5, consisting of a thermoelectric module with reverse thermoelectric effect.

Two dissipating elements - one for air inflow 6 and one for air outflow 2 are thermically coupled to the two faces of the module.

According to the direction of the electric current flowing into the thermoelectric module, these elements either heat or cool the air.

More specifically, when the inflow dissipator is heated, the outflow dissipator is cooled, and vice versa.

A layer of thermoinsulating material 3 is fitted between the two dissipators and also lines the inner walls of the cube-shaped container 8. The degree of thermic insulation between the "hot side" and the "cold side of the device is essential in determining its level of efficiency. The materials that have been found to be best suited for this purpose are composites obtained by alternating layers of cork and polystyrene, for example, or preformed slabs of plaster encasing tiny hollow alumina balls.

An inflow fan 7 sends the air to be conditioned through the louvres of the inflow dissipator so that it can carry off the calories or refrigeration units transmitted by the dissipator.

Simultaneously, an outflow fan 1 sends the air drawn in from outside through the louvres of the outflow dissipator so that it can carry off the calories or refrigeration units transmitted by the dissipator.

The tongues 4 allow the module to be appropriately positioned in the passenger compartment so as to proportion the amounts of fresh and of recycled air as desired.

The module is equipped with air locks, not shown in the figure, that allow manual adjustment of the air flow inside the compartment, with electronic fan-speed regulators and with other secondary features such as directional control, partial exclusion, dust and carbon monoxide filters, etc.

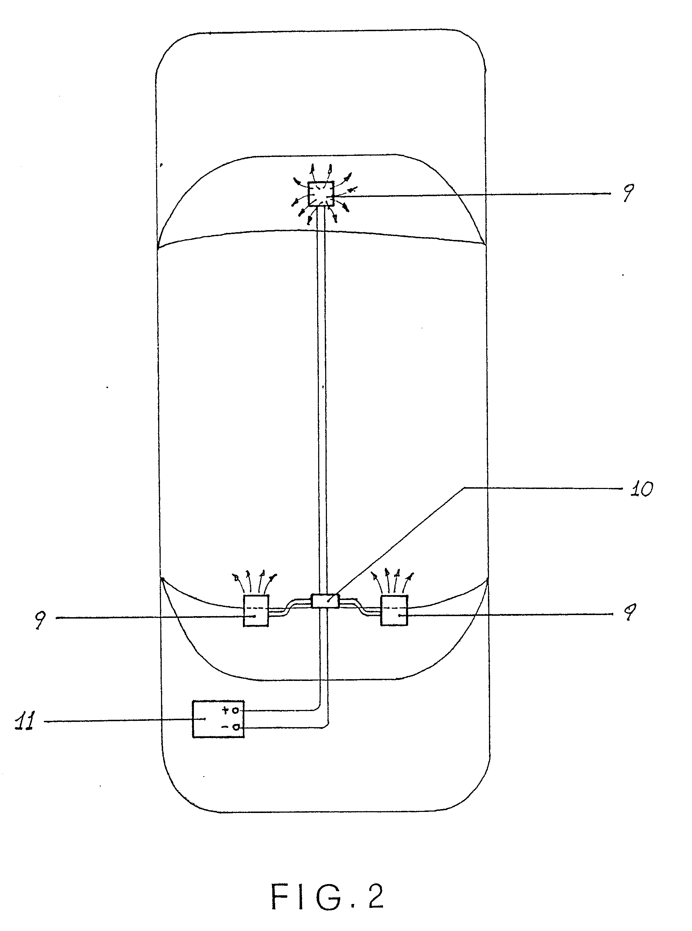

Figure 2 showe three "basic modules" 9 for climate control, the control panel 10 for their use and programming and the car battery 11, sole energy source for the entire system.

## Claims

1. A device for thermal air conditioning, comprising essentially at least one thermoelectric module with reverse thermoelectric effect, powered by low-voltage direct current and equipped with means for reversing the direction of the current, the aforesaid module being thermically coupled to two dissipating elements, thermically insulated from each other and incorporated in a system of forced air circulation.

2. The thermal air conditioning device according to claim 1, powered by direct electric current at between 4 and 10 V.

3. The thermal air conditioning device according to the preceding claims, subordinated to a temperature sensor.

4. The thermal air conditioning device according to the preceding claims, consisting of a plurality of thermoelectric modules with reverse thermoelectric effect installed in separate locations.

5. The thermal air conditioning device according to claims 1 to 3, consisting of a single centralized thermoelectric module with reverse thermoelectric effect.

6. Use of the device according to the preceding claims to control the temperature inside the passenger compartments of motor vehicles, water craft and aircraft in winter and in summer according to the direction of the current.

7. Use of the device according to claims 1 to 5 for conditioning or maintaining at a controlled level the temperature of control rooms, computers and electronic equipment.

FIG.1

FIG. 2